# EUROPÄISCHE PATENTANMELDUNG

(11) **EP 0 989 310 A2**
(43) Veröffentlichungstag der Anmeldung: **29.03.2000**
(21) Anmeldenummer: 99115630.8
(22) Anmeldetag: 07.08.1999
(51) Int. Cl.: F16B 37/10

(54) **Schnellverstellmutter**

(30) Priorität: 22.09.1998 DE 19843218
(71) Anmelder: fischerwerke Artur Fischer GmbH & Co. KG, 72178 Waldachtal (DE)
(72) Erfinder: Frischmann, Albert, 79341 Kenzingen (DE); Rieger, Johannes, 79336 Herbolzheim (DE); Striebich, Jürgen, 72160 Horb (DE)

(57) **Zusammenfassung**

Die Erfindung betrifft eine Schnellverstellmutter (10) zur Befestigung einer abgehängten Decke an einer Raumdecke. Die Erfindung schlägt vor, die Schnellverstellmutter (10) durch einen Längsschlitz (14) aufweitbar auszubilden, so daß die Schnellverstellmutter (10) außer Eingriff von einem Bolzengewinde eines an der Raumdecke angebrachten Gewindestabs bringbar und ohne Schraubbewegung in axialer Richtung verschiebbar ist. Durch Verengen wird die Schnellverstellmutter (10) in Eingriff mit dem Gewindestab gebracht und kann wie eine herkömmliche Mutter auf dem Gewindestab geschraubt werden. Eine abgehängte Decke läßt sich mittels eines zu einem Haken gebogenen Drahts (38) an die Schnellverstellmutter (10) anhängen, wobei der Draht (38) die Schnellverstellmutter (10) gegen Aufweitung sichert.

## Beschreibung

Die Erfindung betrifft eine Schnellverstellmutter, die insbesondere zum Anhängen einer abgehängten Decke an einen an einer Raumdecke angebrachten Gewindestab vorgesehen ist.

Zum Befestigen einer abgehängten Decke an einer Raumdecke ist ein großer Verstellbereich von die abgehängte Decke tragenden Abhängeelementen notwendig oder zumindest hilfreich. Als Abhängeelemente sind Abhängedrähte bekannt, auf denen ein in Längsrichtung des Abhängedrahts verstellbarer Abhängeclips angebracht ist. Der Abhängeclips ist ein Bügel aus Federblech, der zwei Löcher aufweist, mit denen der Abhängeclips auf den Abhängedraht aufgeschoben ist. Durch Zusammendrücken zweier freier Enden des Abhängeclips wird dieser frei auf dem Abhängedraht verschieblich. Werden die beiden Enden des Abhängeclips losgelassen, verkantet sich der Abhängeclips aufgrund seiner Federkraft auf dem Abhängedraht und ist dadurch fixiert . Der Abhängedraht wird an der Gebäudedecke befestigt, am Abhängeclips wird die abgehängte Decke befestigt. Die Tragkraft eines derartigen Abhängeclips ist begrenzt.

Zur Erhöhung der Tragkraft kann eine Mutter auf einen Gewindestab aufgeschraubt werden, der an Stelle des Abhängedrahts an der Gebäudedecke befestigt ist. An der Mutter wird die abgehängte Decke angebracht. Dies hat den Nachteil, daß die Mutter zur Einstellung der Höhe der abgehängten Decke oftmals über eine große Länge der Gewindestabs geschraubt werden muß, was zeitraubend ist.

Der Erfindung liegt die Aufgabe zugrunde, eine Schnellverstellmutter zu schaffen, die ohne Schraubbewegung in Längsrichtung auf einem Gewindestab verstellbar und an einer gewünschten Stelle in Eingriff mit dem Gewindestab bringbar ist.

Diese Aufgabe wird erfindungsgemäß durch die Merkmale des Anspruchs 1 gelöst. Die erfindungsgemäße Schnellverstellmutter weist einen Mutternkörper auf, der mit einem in Längsrichtung über die gesamte Länge eines Mutterngewindes durchgehenden Schlitz versehen ist. Dabei braucht der Schlitz nicht in Längsrichtung verlaufen, er kann beispielsweise auch in einen Winkel zur Längsrichtung bzw. wendelförmig verlaufen. Durch den die gesamte Länge des Mutterngewindes durchsetzenden Schlitz ist der Mutternkörper aufweitbar, so daß die Schnellverstellmutter außer Eingriff von einem zum Mutterngewinde komplementären Bolzengewinde bringbar ist. Der Mutternkörper der erfindungsgemäßen Schnellverstellmutter läßt sich also aufweiten und in aufgeweitetem Zustand ohne Drehbewegung auf einen Gewindestab aufschieben und in Längsrichtung des Gewindestabs an eine gewünschte Stelle des Gewindestabs verschieben. An der gewünschten Stelle wird die Schnellverstellmutter wieder verengt und dadurch das Mutterngewinde mit einem Bolzengewinde des Gewindestabs in Eingriff gebracht. Danach kann die Schnellverstellmutter zur Feinverstellung auf dem Gewindestab geschraubt und es kann die abgehängte Decke an die Mutter angehängt werden.

Die erfindungsgemäße Schnellverstellmutter hat den Vorteil, daß sie schnell und ohne Schraubbewegung an eine gewünschte Stelle eines Gewindestabs verbracht werden kann. Anschließend läßt sich die erfindungsgemäße Schnellverstellmutter wie eine herkömmliche Mutter durch Schrauben in Längsrichtung des Gewindestabs verstellen. Weiterer Vorteil der erfindungsgemäßen Schnellverstellmutter ist deren hohe Tragkraft, die derjenigen einer herkömmlichen Mutter entspricht.

Bei einer Ausgestaltung der Erfindung ist der Mutternkörper der Schnellverstellmutter elastisch ausgebildet und dadurch aufweitbar, so daß die Schnellverstellmutter außer Eingriff von dem Gewindestab bringbar ist.

Bei einer Ausgestaltung der Erfindung ist der Mutternkörper in zwei oder mehr Teile geteilt. Die Teile des Mutternkörpers sind über ein Scharnier schwenkbar miteinander verbunden, so daß die Schnellverstellmutter durch Auseinanderschwenken der Teile ihres Mutternkörpers außer Eingriff vom Gewindestab bringbar sind. Das Scharnier kann als Gelenk ausgebildet sein, es kann allerdings beispielsweise auch ein Federbügel oder dgl. sein.

Bei einer Weiterbildung der Erfindung weist die Schnellverstellmutter eine lösbare Sicherungseinrichtung auf, die den Mutternkörper gegen eine Aufweitung sichert und dadurch in Eingriff an dem Gewindestab hält. Die Sicherungseinrichtung sichert die Schnellverstellmutter gegen ein unbeabsichtigtes Lösen vom Gewindestab. Weiterer Vorteil der Sicherungseinrichtung ist, daß sich die in Eingriff auf dem Gewindestab befindliche Schnellverstellmutter nicht infolge einer Belastung beispielsweise durch eine an der Schnellverstellmutter angehängte Last aufweiten und dadurch außer Eingriff vom Gewindestab gelangen kann. Die Tragkraft der Schnellverstellmutter wird durch die Sicherungseinrichtung erhöht.

Bei einer Ausgestaltung der Erfindung ist die Sicherungseinrichtung als Sicherungsring ausgebildet, der den Mutternkörper umgreifend auf die Schnellverstellmutter aufgesetzt wird. Der Sicherungsring verhindert eine Aufweitung des Mutternkörpers und hält dadurch die Schnellverstellmutter in Eingriff auf dem Gewindestab.

Bei einer anderen Ausgestaltung der Erfindung weist die Sicherungseinrichtung zwei Laschen auf, die beiderseits des das Mutterngewinde in Längsrichtung durchsetzenden Schlitzes am Mutternkörper angebracht sind. Die Laschen können einstückig mit dem Mutternkörper sein. Die Laschen stehen nach außen vom Mutternkörper ab. Durch einen lösbaren Verbinder, der an den beiden Laschen anbringbar ist, werden die beiden Laschen aneinander gehalten, wobei aneinander hier nicht darauf beschränkt ist, daß die Laschen aneinander anliegen. Die Laschen können auch einen Abstand voneinander aufweisen, wobei der Abstand der Laschen durch den Verbinder begrenzt ist, so daß sich der Mutternkörper nicht aufweiten läßt. Der lösbare Verbinder kann beispielsweise ein Haken sein, der die beiden Laschen über- oder durchgreift und dadurch aneinander hält. Ein solcher Haken kann ein Ende eines Drahtes sein, an dem die abgehängte Decke befestigt ist. Auf diese Weise wird durch das Anhängen einer Last an die erfindungsgemäße Schnellverstellmutter die Sicherungseinrichtung in einer Sicherungsstellung fixiert und die Schnellverstellmutter in Eingriff mit dem Gewindestab gehalten.

Bei einer Ausgestaltung der Erfindung weist eine der beiden Laschen ein Durchgreifelement auf, das eine Öffnung in der anderen Lasche durchgreift. Durch Einhängen eines Drahthakens oder Einstecken eines Sicherungsstifts oder dgl. in ein Loch des Durchgreifelements werden die beiden Laschen aneinander und auf diese Weise die Schnellverstellmutter in Eingriff mit dem Gewindestab gehalten.

Vorzugsweise ist die erfindungsgemäße Schnellverstellmutter einschließlich ihrer Sicherungseinrichtung einstückig hergestellt. Sie kann beispielsweise als Spritzgießteil aus Kunststoff oder als Metallteil hergestellt sein.

Die Erfindung wird nachfolgend anhand in der Zeichnung dargestellter Ausführungsbeispiele erläutert. Die drei Figuren zeigen drei Ausführungsbeispiele erfindungsgemäßer Schnellverstellmuttern in perspektivischer Darstellung.

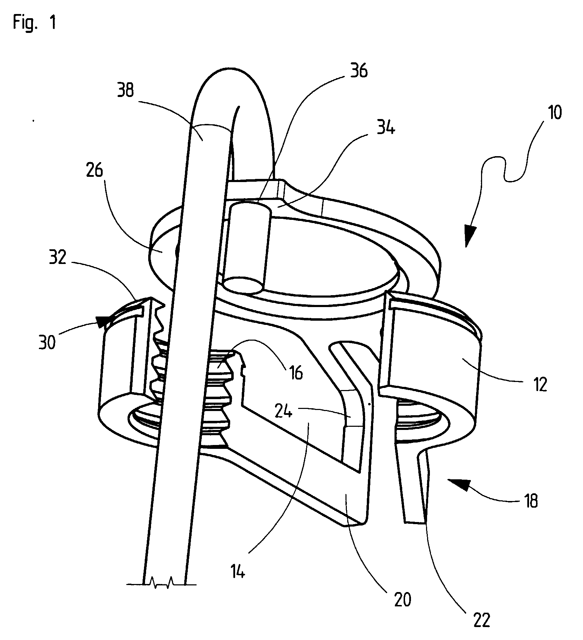

Die in Figur 1 dargestellte, insgesamt mit 10 bezeichnete, erfindungsgemäße Schnellverstellmutter weist zwei Halbmuttern 12 auf, die einen ebenfalls mit 12 bezeichneten Mutternkörper bilden. Der Mutternkörper 12 ist durch zwei einander gegenüberliegende, in einer Axialebene angeordnete Schlitze 14 in die beiden Halbmuttern 12 geteilt. In Figur 1 ist die Schnellverstellmutter 10 in einem geöffneten Zustand dargestellt, in dem der Mutternkörper 12 aufgeweitet, d. h. die Halbmuttern 12 voneinander entfernt sind. Im geöffneten Zustand sind die Schlitze 14 breit. Jede der beiden Halbmuttern 12 erstreckt sich in Umfangsrichtung um etwas weniger als einen Halbkreis. Jede der beiden Halbmuttern 12 weist eine Hälfte eines Mutterngewindes 16 auf

Die beiden Halbmuttern 12 sind über ein Scharnier 18 schwenkbar miteinander verbunden: Stege 20 sind beiderseits eines der beiden Schlitze 14 an den Halbmuttern 12 angeordnet und stehen näherungsweise radial von den Halbmuttern 12 ab. Mit Abstand von den Halbmuttern 12 verlaufen die Stege 20 nach einer Abwinklung um 90° achsparallel zum Mutternkörper 12 und nach einer weiteren Abwinklung 24 um ebenfalls 90° wieder radial nach innen, wo sich die beiden Stege 20 im Bereich eines Umfangs des Mutternkörpers 12 vereinigen. Die Vereinigungsstelle ist mit Bezugszahl 25 bezeichnet. Die Stege 20 weisen in Seitenansicht eine U-Form auf. Durch ihre elastische Verformbarkeit ermöglichen die das Scharnier 18 bildenden Stege 20 ein Auseinander- und Zusammenschwenken der Halbmuttern 12.

An der Vereinigungsstelle 25 gehen die Stege 20 einstückig in einen Sicherungsring 26 über, der sich auf einer Stirnseite der beiden Halbmuttern 12 befindet und dessen Innendurchmesser größer als ein Außendurchmesser des Mutterngewindes 16 ist. Der Sicherungsring 26 ist zum Eingriff in einer Nut 30 vorgesehen, die nahe der dem Sicherungsring 26 zugewandten Stirnseite der Halbmuttern 12 in einer Außenumfangsfläche der Halbmuttern 12 angebracht ist. Die Nut 30 setzt sich über beide Halbmuttern 12 hinweg fort. Eine Fase 32 erleichtert das Einrasten des Sicherungsrings 26 in die Nut 30 der beiden Halbmuttern 12, wenn die Halbmuttern 12 zusammengeschwenkt sind.

Den beiden das Scharnier 18 bildenden Stegen 20 gegenüber weist der Sicherungsring 26 eine Verbreiterung 34 auf, in der ein Loch 36 als Einhängeeinrichtung angebracht ist.

Die Funktion der in Figur 1 dargestellten, erfindungsgemäßen Schnellverstellmutter 10 ist folgende: Die Schnellverstellmutter 10 ist zur Befestigung einer abgehängten Decke an einer Gebäudedecke vorgesehen (nicht dargestellt). In ihrer aufgeweiteten oder geöffneten, in Figur 1 dargestellten Stellung läßt sich die Schnellverstellmutter 10 auf einen der klaren Darstellung wegen nicht gezeichneten Gewindestab aufsetzen, der an der Gebäudedecke befestigt ist. In ihrem geöffneten Zustand läßt sich die Schnellverstellmutter 10 ohne Dreh- oder Schraubbewegung in axialer Richtung auf dem Gewindestab verschieben. An einer gewünschten Stelle des Gewindestabs werden die beiden den Mutternkörper 12 bildenden Halbmuttern 12 zusammengedrückt, so daß das Mutterngewinde 12 in Eingriff mit einem Bolzengewinde des Gewindestabs gelangt. Anschließend wird der Sicherungsring 26 an die zusammengedrückten Halbmuttern 12 angedrückt, wobei er über die Fase 32 der Halbmuttern 12 gleitet und in die Nut 30 der Halbmuttern 12 einrastet. Die beiden Halbmuttern 12 sind in ihrer zusammengedrückten, nicht dargestellten Stellung fixiert, in der sie mit ihrem Mutterngewinde 16 in Eingriff mit dem Bolzengewinde des nicht dargestellten Gewindestabs stehen. Der in die Nut 30 der Halbmuttern 12 eingerastete Sicherungsring 26 hält die Halbmuttern 12 in Eingriff mit mit dem Bolzengewinde. In dieser geschlossenen Stellung läßt sich die Schnellverstellmutter 10 wie eine herkömmliche Mutter auf dem Gewindestab hin- und herschrauben, wodurch eine Feinjustierung möglich ist.

Nachdem die Schnellverstellmutter 10 in Eingriff mit dem Bolzengewinde des Gewindestabs gebracht und der Sicherungsring 26 eingerastet worden ist, wird in das die Einhängeeinrichtung bildende Loch 36 des Sicherungsrings 26 ein zu einem Haken gebogener Draht 38 eingehängt, an dem die nicht dargestellte, abgehängte Decke befestigt bzw. befestigbar ist. Der in das Loch 36 des Sicherungsrings 26 eingehängte Draht 38 zieht mit der an ihm hängenden abgehängten Decke den Sicherungsring 26 gegen die beiden Halbmuttern 12 und hält dadurch den Sicherungsring 26 sicher in Eingriff in der Nut 30 der Halbmuttern 12, wodurch der Eingriff des Mutterngewindes 16 im Bolzengewinde des Gewindestabs sichergestellt ist.

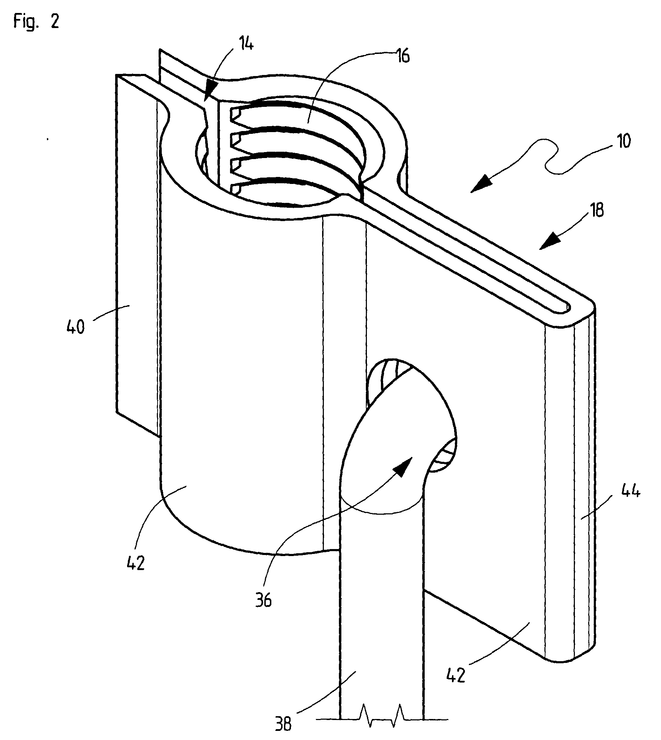

Figur 2 zeigt ein zweites Ausführungsbeispiel einer erfindungsgemäßen Schnellverstellmutter 10. Für gleiche Teile werden nachfolgend dieselben Bezugszahlen wie in Figur 1 verwendet. Die in Figur 2 gezeigte Schnellverstellmutter 10 weist zwei Halbmuttern 12 auf, die einen Mutternkörper 12 bilden. Die beiden Halbmuttern 12 sind durch zwei einander gegenüberliegend angeordnete, durchgehende Längsschlitze 14 voneinander getrennt. Die Halbmuttern 12 sind mit einem Mutterngewinde 16 versehen.

Beiderseits eines der beiden Längsschlitze 14 stehen zwei Spreizflansche 40 näherungsweise radial von den Halbmuttern 12 ab. Auf der gegenüberliegenden Seite sind die Halbmuttern 12 über ein Scharnier 18 miteinander verbunden. Das Scharnier 18 weist zwei Scharnierflansche 42 auf, die beiderseits des anderen Längsschlitzes 14 näherungsweise radial zum Mutternkörper 12 und parallel zueinander mit einem der Breite des Längsschlitzes 14 entsprechenden Abstand voneinander nach außen von den Halbmuttern 12 abstehen. An ihren äußeren Enden gehen die Scharnierflansche 42 über eine 180°-Biegung 44 einstückig ineinander über. Die Scharnierflansche 42 werden von einem Loch durchsetzt, das deckungsgleich in beiden Scharnierflanschen 42 angebracht ist und das eine Einhängeeinrichtung 36 bildet.

Die Funktion der in Figur 2 dargestellten Schnellverstellmutter 10 ist folgende: Die Schnellverstellmutter 10 läßt sich beispielsweise mittels eines nicht dargestellten, zwischen den beiden Spreizflanschen 40 angesetzten Schraubendrehers aufweiten, d. h. ihre beiden Halbmuttern 12 werden auseinandergeschwenkt. In der aufgeweiteten Stellung läßt sich die Schnellverstellmutter 10 auf einem nicht dargestellten, an einer Decke befestigten Gewindestab in axialer Richtung verschieben. Beim Aufspreizen werden die das Scharnier 18 bildenden Scharnierflansche 42 einschließlich deren 180°-Biegung 44 elastisch verformt. An einer gewünschten Stelle des Gewindestabes wird die Aufweitung gelöst und das Scharnier 18 drückt die Halbmuttern 12 wieder zusammen. Das Mutterngewinde 16 der Halbmuttern 12 gelangt mit dem Bolzengewinde des Gewindestabs in Eingriff und wird durch die Elastizität des Scharniers 18 in Eingriff gehalten. Die Schnellverstellmutter 10 läßt sich in der nicht aufgeweiteten, in der Zeichnung dargestellten Stellung wie eine herkömmliche Mutter auf dem Gewindestab durch Schrauben bewegen. Befindet sich die Schnellverstellmutter 10 in der gewünschten Position auf dem Gewindestab, kann ein zu einem Haken gebogener Draht 38 in das die Einhängeeinrichtung 36 bildende Loch in den Scharnierflanschen 42 eingehängt werden. Der zu einem Haken gebogene Draht 38 hält die Scharnierflansche 22 zusammen, so daß die Scharnierflansche 42 nicht voneinander entfernt werden können. Die zusammengehaltenen Scharnierflansche 42 halten die Halbmuttern 12 zusammen, so daß diese nicht außer Eingriff vom Bolzengewinde des Gewindestabs gebracht werden können. Das Scharnier 18 mit dem die Einhängeeinrichtung bildenden Loch 36 bildet somit eine Sicherungseinrichtung, die durch Einhängen des Drahtes 38 den Eingriff der Schnellverstellmutter 10 im Bolzengewinde des Gewindestabs sicherstellt. Auch eine an die Schnellverstellmutter 10 angehängte Last kann die gesicherte Schnellverstellmutter 10 nicht außer Eingriff vom Bolzengewinde des Gewindestabs bringen.

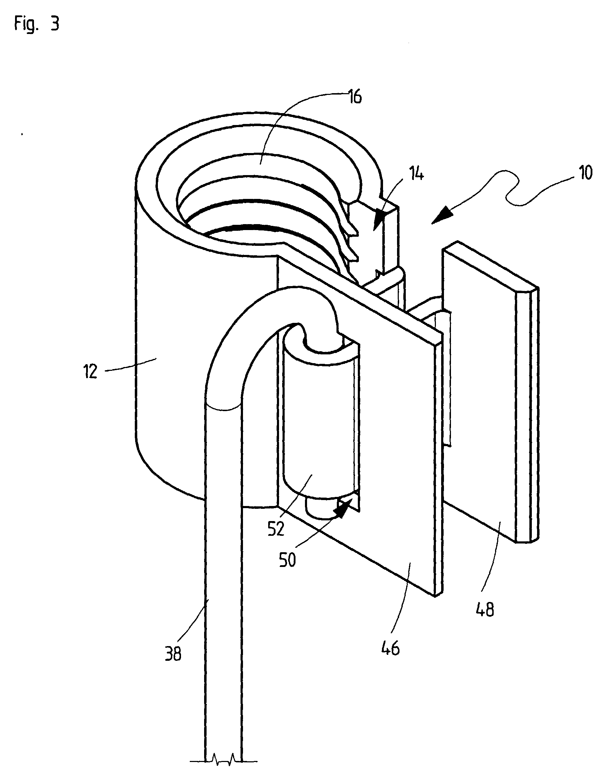

Figur 3 zeigt ein drittes Ausführungsbeispiel einer erfindungsgemäßen Schnellverstellmutter 10. Es werden wiederum für gleiche Teile übereinstimmende Bezugszeichen verwendet. Die in Figur 3 dargestellte Schnellverstellmutter 10 weist einen Mutternkörper 12 mit einem durchgehenden Längsschlitz 14 auf. Der Mutternkörper 12 weist in Umfangsrichtung einen Umschlingungswinkel von über 270° und weniger als 360° auf. Der Mutternkörper 12 ist mit einem Mutterngewinde 16 versehen.

Beiderseits des Längsschlitzes 14 stehen zwei Flansche 46, 48 mit Abstand und parallel zueinander in etwa radial nach außen vom Mutternkörper 12 ab. Die Flansche 46, 48 sind einstückig mit dem Mutternkörper 12.

Einer der beiden Flansche 46 weist eine Öffnung in Form eines rechteckigen Lochs 50 auf. Der andere Flansch 48 ist in seinem Mittelbereich zu einem U-förmigen Flachbügel 52 geformt, der in Richtung des einen Flansches 46 vom anderen Flansch 48 absteht und das rechteckige Loch 50 durchgreift.

Die Funktion der in Figur 3 dargestellten Schnellverstellmutter 10 ist folgende: Beispielsweise durch Druck auf den den einen Flansch 46 durchgreifenden U-förmigen Flachbügel 52 oder durch Ansetzen eines nicht dargestellten Schraubendrehers zwischen den beiden Flanschen 46, 48 läßt sich der Mutternkörper 12 elastisch aufweiten. In der aufgeweiteten, nicht dargestellten Stellung läßt sich die Schnellverstellmutter 10 ohne Dreh- oder Schraubbewegung axial auf einem an einer Raumdecke angebrachten, nicht dargestellten Gewindestab verschieben. An einer gewünschten Stelle wird die Aufweitung gelöst, wodurch sich der Mutternkörper 12 aufgrund seiner Elastizität auf seinen ursprünglichen, in der Zeichnung dargestellten Ausgangszustand verengt. In dem verengten Ausgangszustand steht das Mutterngewinde 16 in Eingriff mit einem Bolzengewinde des Gewindestabs, die Schnellverstellmutter läßt sich wie eine herkömmliche Mutter durch Schrauben auf den Gewindestab bewegen. Der das Loch 50 durchgreifende U-förmige Flachbügel 52 bildet eine Sicherheits- und Einhängeeinrichtung. Durch Einhängen eines zu einem Haken gebogenen Drahts 38 in den den einen Flansch 46 durchgreifenden U-förmigen Flachbügel 52 wird verhindert, daß sich die Flansche 46, 48 voneinander entfernen können. Dies wiederum verhindert, daß der Mutternkörper 12 sich aufweiten kann, d. h. der Eingriff der Schnellverstellmutter 10 im Bolzengewinde des Gewindestabs ist durch den in den U-förmigen Flachbügel 52 eingehängten Draht 38 sichergestellt. Am Draht 38 ist eine abgehängte, nicht dargestellte Decke angebracht bzw. anbringbar.

Die in Figuren 1 bis 3 dargestellten Schnellverstellmuttern sind einstückig beispielsweise aus Kunststoff oder Metall hergestellt.

## Patentansprüche

1. Schnellverstellmutter, **dadurch gekennzeichnet**, daß die Schnellverstellmutter (10) einen ein Mutterngewinde (16) aufweisenden Mutternkörper (12) mit einem in Längsrichtung über die gesamte Länge des Mutterngewindes (16) durchgehenden Schlitz (14) aufweist, und daß der Mutternkörper (12) aufweitbar ausgebildet ist, so daß die Schnellverstellmutter (10) außer Eingriff von einem zum Mutterngewinde (16) komplementären Bolzengewinde bringbar ist.

2. Schnellverstellmutter nach Anspruch 1, **dadurch gekennzeichnet**, daß der Mutternkörper (12) elastisch aufweitbar ist.

3. Schnellverstellmutter nach Anspruch 1, **dadurch gekennzeichnet**, daß der Mutternkörper (12) geteilt ist und ein Scharnier (18) aufweist, das Teile des Mutternkörpers (12) schwenkbar miteinander verbindet.

4. Schnellverstellmutter nach Anspruch 1, **dadurch gekennzeichnet**, daß die Schnellverstellmutter (10) eine lösbare Sicherungseinrichtung (26; 42; 52) aufweist, die den Mutternkörper (12) gegen Aufweitung sichert.

5. Schnellverstellmutter nach Anspruch 4, **dadurch gekennzeichnet**, daß die Sicherungseinrichtung einen Sicherungsring (26) aufweist, der den Mutternkörper (12) umgreift und gegen Aufweitung sichert.

6. Schnellverstellmutter nach Anspruch 4, **dadurch gekennzeichnet**, daß die Sicherungseinrichtung zwei Flansche (42; 46, 48) aufweist, die beiderseits des Schlitzes (14) nach außen vom Mutternkörper (12) abstehen, und daß die Sicherungseinrichtung einen lösbaren Verbinder (38, 52) aufweist, der die beiden Flansche (42; 46, 48) aneinander hält.

7. Schnellverstellmutter nach Anspruch 6, **dadurch gekennzeichnet**, daß einer der beiden Flansche (46) eine Öffnung (50) aufweist, die von einem Durchgreifelement (52) des anderen Flansches (48) durchgriffen wird, und daß das Durchgreifelement (52) mittels eines Sicherungselements (38) an dem durchgriffenen Flansch (46) sicherbar ist.

8. Schnellverstellmutter nach Anspruch 4, **dadurch gekennzeichnet**, daß die Sicherungseinrichtung (26; 42; 52) eine Einhängeeinrichtung (36; 52) aufweist, die durch Einhängen eines Gegenstandes (38) die Sicherungseinrichtung (26; 52) in einer Sicherungsstellung hält.

9. Schnellverstellmutter nach Anspruch 1, **dadurch gekennzeichnet**, daß die Schnellverstellmutter (10) einstückig ist.
